# EUROPEAN PATENT APPLICATION

(11) **EP 4 672 023 A1**
(43) Date of publication of application: **31.12.2025**
(21) Application number: 24185383.7
(22) Date of filing: 28.06.2024
(51) Int. Cl.: G06F 16/332

(54) **GENERATING A VIRTUAL PERSON FOR INTERACTION WITH A REAL PERSON**

(71) Applicant: Siemens Aktiengesellschaft, 80333 München (DE)
(72) Inventor: Johnson, Rebecca, 81739 München (DE)
(74) Representative: Siemens Patent Attorneys

(57) **Abstract**

The disclosure relates to an automated method for generating a virtual person (VP) for interaction with a real person (RP), the method comprising the steps:
- generating (S1) a user interface, the user interface requesting a personality parameter for the virtual person,
- receiving (S2) the personality parameter via a receiving option,
wherein the personality parameter is received in a human-understandable format,
- converting (S3) the personality parameter into a prompt for a large language model, the prompt being in a machine-readable format according to a programming language,
- generating (S4) a digital model based on the prompt by the large language model, and
- generating (S5) the virtual person (VP) for interaction with the real person (RP) based on the digital model.

A corresponding system, a computer program product, and a computer-readable storage medium are disclosed as well.

## Description

Independent of the grammatical term usage, individuals with male, female or other gender identities are included within the term.

### DESCRIPTION

### Field of the Invention

The embodiments disclosed herein relate to an automated method for generating a virtual person for interaction with a real person. A corresponding system, a computer program product, and a computer-readable storage medium are disclosed as well.

### Background of the Invention

The art of using generative AI systems, especially large language models (LLMs), such as ChatGPT, requires a new skill, the so-called "prompt crafting".

The creation of the instructions for this system (e.g. prompt crafting for the configuration of LLMs and the adaption of LLMs) brings new challenges and requires a on the one side a strong understanding of the surrounding technical ecosystem (e.g. the domain) as well as the resulting solution space and necessary constraints (a software developer does not necessarily have this understanding, but a domain expert does). On the other side programming skills are needed for the creation of the instructions, which a software developer has, but not the domain expert.

A domain expert is an individual with extensive knowledge or skills in a specific area or industry. In the context of UX design, domain experts are often consulted to provide insight into specific user behaviours, industry practices, or regulatory requirements. They have a deep understanding of the intricacies, challenges, and nuances of their field. A software developer focuses on the technical implementation of software solutions, e.g. of generative AI systems.

Currently, the configuration and/or the instruction (i.e. the set-up, not the communication itself) of Generative AI systems such as Chat GPT is practiced by simply trying it out in a way of playing and then adopting it into the code of the software solution (by the software developer). This requires costly access to the system and some repetition. It is a pure "trial and error".

Accordingly, there is a need for to overcome this problem.

### Summary

Embodiments herein generally relate to an automated method for generating a virtual person for interaction with a real person (e.g. a user).

The method comprising the step of generating (= provisioning, displaying, providing) a user interface. The user interface requesting a personality parameter (especially at least one personality parameter) for the virtual person. The personality parameter is arranged to configure the virtual person. The personality parameter can also be seen as personality data or as configuration data of the virtual person; the personality parameter, especially several personality parameters, form a personality profile and/or a backstory of the virtual person.

The method further comprising the step of receiving (= collecting, gathering, recording) a user-input comprising the personality parameter via a receiving option (e.g. an option for a collection of a user input from the real person, e.g. from user perspective an input option for the user (for the real person)) by an electronic receiving unit, e.g. a keyboard, a mouse, a sensor, a camera, a microphone. The personality parameter is received in a human-understandable format, (e.g. in a human comprehendible format, understand after read or heard by a human).

The method further comprising the step of converting the personality parameter into a prompt for a large language model (for generating a digital model for the virtual person (e.g. the digital model is modelling the virtual person)) by an electronic computation unit, e.g. a processor. The conversation includes known personality profiles, e.g. Myers-Briggs 16 personalities and corresponding attributes and can therefore represent a personality in temper, mood and augment a neutral answer to a coherently passionate answer.

The prompt being in a machine-readable format according to a programming language according to Application Programming Interface requirements, in JavaScript Object Notation Format or in an array. The prompt is json formatted string including list objects of available emotions and gestures for the virtual person to embody and the text to speech engine to synthesize, e.g. "choose a suitable gesture from the following 'shouldershrug', 'eyerolling' and encapsulate it in curly brackets as well as a suitable tone of voice from the following 'shouting', `cheerfull', 'flirty' and encapsulate it in square brackets.".

The method further comprising the step of generating a digital model based on the prompt by the large language model (e.g. an AI system, a generative AI system, ChatGPT) by an electronic computation unit, e.g. a processor.

The method further comprising the step of generating (e.g. outputting, providing) the virtual person for interaction with the real person (e.g. the user) based on the digital model (meaning based on the prompt, again meaning based on the personality parameter).

Accordingly, the method supports a user (domain expert) to receive a virtual person according to the personality parameter provided by the user. The personality parameter is converted by the method into a prompt and used to generate the virtual person. The user does not need to have programming skills to receive the virtual person according to their configuration or reconfiguring wishes (the personality parameters). Further, the software developer does not need to have knowledge about the domain.

The method can be seen as a software wizard to a prompt for a generative AI system, especially a virtual person for interaction with the real person. A software wizard, also a setup assistant or multi-step form, is a user interface that leads a user through a sequence of small steps, like a dialog box to configure a software program, e.g. a generative AI system, for the first time or to reconfigure (adapt) it. A complex, rare, or unfamiliar task may be easier with a software wizard that breaks the task into simpler pieces.

In a further embodiment the virtual person is configured as an avatar. An avatar is a virtual person or an artificial person in the form of a graphic figure, which represents the embodiment of a person, especially a photorealistic representation. In other words, the virtual person can be represented as a digital person, especially with corresponding body extremities, facial features and the like. In particular, the avatar can also perform movements of the face and body depending on the output signal for the output of the avatar. For example, when the avatar speaks, corresponding mouth movements can be issued. Thus, an extremely realistic communication between the real person and the virtual person, especially the avatar, can be realized.

In a further embodiment the method comprising the further step of receiving (= collecting, gathering, e.g. a recording of a voice input, a capturing of a mimic and/or a capturing of a gestic, each from the user (e.g. the real person)) an adaptive personality parameter for an adapted virtual person (via a receiving option) during the interaction of the virtual person with the real person. The adaptive personality parameter is arranged to configure the adapted virtual person, (especially to configure it together with the personality parameter). The adaptive personality parameter is received in a human-understandable format.

In the said embodiment the method comprising the further step of converting the adaptive personality parameter into an adapted prompt for a large language model. The adapted prompt being in a machine-readable format according to a programming language. In the said embodiment the method comprising the further step of generating an adapted digital model based on the adapted prompt (optionally together with the (pervious) prompt) by the large language model. In the said embodiment the method comprising the further step of generating the adapted virtual person for interaction with the real person based on the adapted digital model.

According to this embodiment a continuous adaption, also an amendment and/or an adjustment, of the prompt for a large language model, the digital model, and the virtual person is performed based on the content of the interaction and/or on what is received (collected, gathered) during the interaction with the real person/the user.

In a further embodiment the generation of the digital model is further based on pre-defined configuration data (e.g. pre-defined personality data; this means additional personal data, which has been pre-defined not by the user (real person), but by a software developer).

The pre-defined configuration data is especially configured as domain independent and/or as a general backstory of the virtual person.

In a further embodiment the generation of the virtual person for interaction with the real person (e.g. the user) based on the digital model is done by displaying (e.g. representing, presenting) the virtual person.

Displaying is of advantage as it makes the interaction between real person and the virtual person easier to execute. The virtual person is especially generated (displayed) in life-sized.

This enables an improved and more realistic interaction between the real person and the virtual person.

In a further embodiment the generation of the virtual person for interaction with the real person (e.g. the user) based on the digital model is done by a 3D computer graphics engine (for example by "unreal engine", a series of 3D computer graphics game engines developed by Epic Games) and a displaying unit, e.g. an output device, especially a monitor, and/or glasses (e.g. virtual reality glasses).

Further a system for generating a virtual person for an interaction with a real person is disclosed. The system comprising at least one electronic computation unit (e.g. a processor and/or a computational device) and an output device (e.g. a displaying unit, e.g. a monitor, and/or glasses (e.g. virtual reality glasses), wherein the system is arranged to execute a method according to one of the claims 1 to 12.

Further a computer program product is disclosed. The computer program product comprising instructions, which, when the program is executed by the computational device, cause the computational device to carry out the steps of the disclosed method.

Further a computer-readable storage medium is disclosed. The computer program product comprising instructions which, when executed by the computational device, cause the computational device to carry out the steps of the disclosed method.

It is to be understood that the elements and features recited in the appended claims may be combined in different ways to produce new claims that likewise fall within the scope of the present invention. Thus, whereby the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

### Brief Description of the Drawing

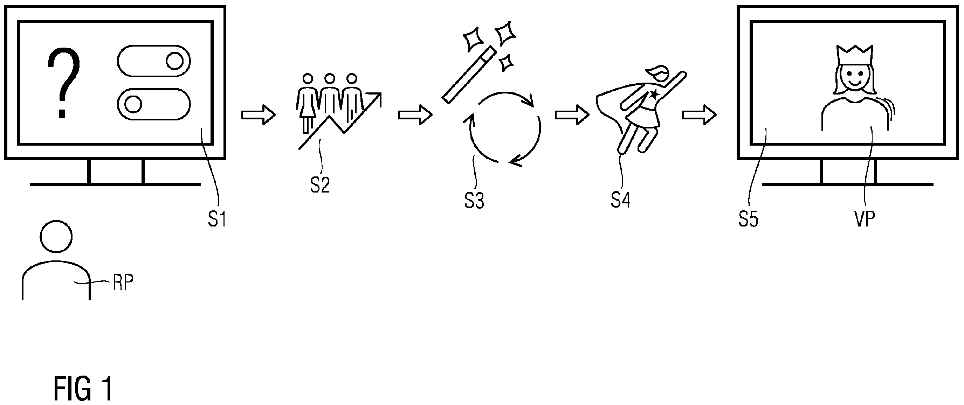

- Fig. 1: shows a method according to the invention.

### Detailed Description of the Drawings

Fig. 1 shows a method for generating a virtual person VP for interaction with a real person RP, the method comprising the steps:
- Step S1: generating a user interface, the user interface requesting a personality parameter for the virtual person,
- Step S2: receiving the personality parameter via a receiving option,
   wherein the personality parameter is received in a human-understandable format,
- Step S3: converting the personality parameter into a prompt for a large language model, the prompt being in a machine-readable format according to a programming language,
- Step S4: generating a digital model based on the prompt by the large language model, and
- Step S5: generating the virtual person VP for interaction with the real person RP based on the digital model.

In an embodiment the personality parameter is comprising an age, and/or an interest, and/or a profession, and/or a location of living, (e.g. a concrete location given in coordinates or a city name, or a location in form of a distance between a living location (of the virtual person) and a location of living of the real person, and/or an appearance, and/or a clothing item, and/or a facial feature, and/or a hair colour, and/or a hair length, and/or a gender, and/or a family parameter, and/or a personal relationship parameter, and/or an ethnicity, and/or a character attitude, and/or a mindset parameter and/or an emotional state of the virtual person.

This allows the user to configure the virtual person according to the needs of their application. Further, using the character attitude, and/or a mindset parameter and/or an emotional state an empathic virtual person is created, which makes the experience for the user more memorable, and in a training situation more effective.

In Fig. 1 the empathy of the virtual person is shown by the smiling face of the virtual person on by the shrug.

In a further embodiment the use interface is requesting the personality parameter using a questionnaire,
wherein the questionnaire comprising a question and for a corresponding answer: the receiving option.

According to this embodiment the questionnaire and especially the question is requesting the personality parameter for the virtual person.

In a further embodiment the questionnaire is arranged as a form comprising the question in text form, and/or a dialog box for a dialogue between the user interface and the real person in text form, and/or a vocal dialog between the user interface and the real person (e.g. the user), especially by using a voice output, e.g. a speaker, and a microphone.

In a further embodiment the question is comprised by the questionnaire in text form, and/or as a vocal output of the user interface.

In a further embodiment the question of the questionnaire is framed as a closed question. According to this embodiment the personality parameter is requested using the closed question. A closed question is a question that can only be answered by selecting from a limited number of options, usually multiple-choice questions with a single-word answer ('yes' or 'no') or a rating scale (e.g. from strongly agree to strongly disagree).

In a further embodiment the receiving option for the personality parameter is configured as a template (especially with a drop-down item and/or an input space) and/or a drop-down item (of a drop-down menu) and/or an input space for a textual input (e.g. a blank space for a textual input). Pre-defined options for the personality parameter, e.g. a drop-down menu is especially useful for a personality parameter comprising a character attitude, and/or a mindset parameter and/or an emotional state.

In a further embodiment the receiving option for the personality parameter is configured as a recording option of a voice input from the real person (e.g. the user), and/or a capturing of a mimic of the real person (e.g. the user), and/or a capturing of a gestic (e.g. hand movement, arm movement, body motion) of the real person (e.g. the user), and/or a capturing of a posture of the real person (e.g. the user), and/or a capturing of a location of the real person (e.g. the user), and/or a capturing of a user personality parameter of the real person (e.g. appearance, age, ethnicity of the real person), and/or a determining of an emotional state of the real person (especially in combination with capturing of a mimic of the real person).

Although the invention has been explained in relation to its advantageous embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. An automated method for generating a virtual person (VP) for interaction with a real person (RP), the method comprising the steps:
- generating (S1) a user interface, the user interface requesting a personality parameter for the virtual person,
- receiving (S2) the personality parameter via a receiving option,
wherein the personality parameter is received in a human-understandable format,
- converting (S3) the personality parameter into a prompt for a large language model, the prompt being in a machine-readable format according to a programming language,
- generating (S4) a digital model based on the prompt by the large language model, and
- generating (S5) the virtual person (VP) for interaction with the real person (RP) based on the digital model.

2. Method according to claim 1,
wherein the virtual person (VP) is configured as an avatar.

3. Method according to one of the previous claims,
comprising the further steps of:
- receiving an adaptive personality parameter for an adapted virtual person during the interaction of the virtual person (VP) with the real person (RP),
wherein the adaptive personality parameter is arranged to configure the adapted virtual person,
wherein the adaptive personality parameter is received in a human-understandable format,
- converting the adaptive personality parameter into an adapted prompt for a large language model,
the adapted prompt being in a machine-readable format according to a programming language,
- generating an adapted digital model based on the adapted prompt by the large language model, and
- generating the adapted virtual person for interaction with the real person based on the adapted digital model.

4. Method according to one of the previous claims,
wherein the personality parameter is comprising:
- an age, and/or
- an interest, and/or
- a profession, and/or
- a location of living, and/or
- an appearance, and/or
- a clothing item, and/or
- a facial feature, and/or
- a hair colour, and/or
- a hair length, and/or
- a gender, and/or
- a family parameter, and/or
- a personal relationship parameter, and/or
- an ethnicity, and/or
- a character attitude, and/or
- a mindset parameter, and/or
- an emotional state
of the virtual person.

5. Method according to one of the previous claims,
wherein the use interface is requesting the personality parameter using a questionnaire, wherein the questionnaire comprising:
- a question and
- for a corresponding answer: the receiving option.

6. Method according to claim 5,
wherein the questionnaire is arranged as:
- a form comprising the question in text form, and/or
- a dialog box for a dialogue between the user interface and the real person in text form, and/or
- a vocal dialog between the user interface and the real person.

7. Method according to one of the claims 5 to 6,
wherein the question is comprised by the questionnaire:
- in text form, and/or
- as a vocal output
of the user interface.

8. Method according to one of the claims 5 to 7,
wherein the question of the questionnaire is framed as a closed question.

9. Method according to one of the previous claims,
wherein the receiving option for the personality parameter is configured as:
∘ a template and/or
∘ a drop-down item and/or
∘ an input space for a textual input, and/or
∘ a recording option of a voice input from the real person, and/or
∘ a capturing of a mimic of the real person, and/or
∘ a capturing of a gestic of the real person, and/or
∘ a capturing of a posture of the real person, and/or
∘ a capturing of a location of the real person, and/or
∘ a capturing of a user personality parameter of the real person, and/or
∘ a determining of an emotional state of the real person.

10. Method according to one of the previous claims,
wherein the generation of the digital model is further based on pre-defined configuration data.

11. Method according to one of the previous claims,
wherein the generation of the virtual person for interaction with the real person based on the digital model is done by displaying the virtual person.

12. Method according to one of the previous claims,
wherein the generation of the virtual person for interaction with the real person based on the digital model is done by:
- a 3D computer graphics engine, and
- a displaying unit.

13. System for generating a virtual person for an interaction with a real person, comprising at least one electronic computation unit and an output device, wherein the system is arranged to execute a method according to one of the claims 1 to 12.

14. A computer program product comprising instructions which, when the program is executed by the computational device, cause the computational device to carry out the steps of the method according to one of the claims 1 to 12.

15. A computer-readable storage medium comprising instructions which, when executed by the computational device, cause the computational device to carry out the steps of the method according to one of the claims 1 to 12.
